(19) Europäisches Patentamt
European Patent Office
Office européen des brevets

(11) Publication number: **0 072 160**
**B1**

(12) **EUROPEAN PATENT SPECIFICATION**

(45) Date of publication of patent specification: **09.04.86**

(51) Int. Cl.$^4$: **C 08 F 18/12,** C 08 F 20/36,
C 07 C 91/26

(21) Application number: **82304032.4**

(22) Date of filing: **30.07.82**

(54) **Quaternary ammonium monomers, polymers thereof and their use in polymerisable compositions and polymerisation processes.**

(30) Priority: **07.08.81 US 291143**

(43) Date of publication of application:
**16.02.83 Bulletin 83/07**

(45) Publication of the grant of the patent:
**09.04.86 Bulletin 86/15**

(84) Designated Contracting States:
**AT BE CH DE FR GB IT LI NL SE**

(56) References cited:
**US-A-3 678 098**
**US-A-3 694 393**

(73) Proprietor: **Rohm and Haas Company**
**Independence Mall West**
**Philadelphia, Pennsylvania 19105 (US)**

(72) Inventor: **Hutton, Thomas Watkins**
**153 Woodview Drive**
**Doylestown Pennsylvania 18901 (US)**

(74) Representative: **Angell, David Whilton et al**
**Rohm and Haas Company Patent Department**
**Chesterfield House Bloomsbury Way**
**London WC1A 2TP (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 072 160 B1

**Description**

This invention is concerned with quaternary ammonium monomers, polymers thereof and their use in polymerisable compositions and polymerisation processes.

Polymers produced in accordance with the invention are useful *inter alia* as wet-strength agents in the making of paper.

US—A—3,678,098 and 3,702,799 discuss in some detail the state of the art of reacting epihalohydrins with a number of different organic compounds to provide a great variety of products. These patents relate more particularly to the production of unsaturated acid ester monomers, including acrylic or methacrylic acid, to produce useful quaternary ammonium monomers capable of reacting with monomers containing vinyl unsaturation by addition polymerization.

Whilst these patents and the prior art cited therein provide useful compounds the compounds do not have desirable reactivity with vinyl acetate and similar vinyl monomers to permit copolymerization for the introduction of low energy cure characteristics provided by the quaternary ammonium compound.

This invention provides a group of ethylenically unsaturated monomers of the quaternary ammonium type which can be usefully copolymerized with vinyl acetate type monomers to provide copolymers capable of low energy curing. These quaternary ammonium monomers may be particularly advantageous when compared to the corresponding methacrylate and acrylate quaternary ammonium monomers; experience with vinyl acetate copolymers has shown the difficulty of incorporating methacrylate and acrylate monomers even at low levels; in addition, such monomers introduce inhibitory and/or retarding effects to the whole system. Thus, the present invention permits the development of monomers and polymers similar to those disclosed in the above U.S. patents, but with enhanced properties to meet specific application requirements.

According to the present invention there are provided compounds of the formula:

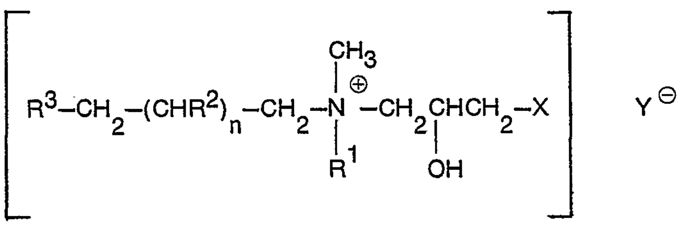

wherein:

$R^1$ is a $C_1$—$C_4$ straight chain alkyl group, or hydroxy-substituted straight chain alkyl group;

n is 0 or 1;

$R^2$ is H or OH;

$R^3$ is an alkenoxy group containing an allyl group or a carbalkenoxy group containing a double bond functionally equivalent to an isolated terminal double bond;

X is halo such as chlorine, bromine or iodine; and

$Y^{\ominus}$ is an anion, preferably one of the following: bromide, chloride, nitrate, sulphate and acetate.

The term isolated is used herein to distinguish the double bond from conjugated or cumulated double bonds. Thus, for example, acrylates and methacrylates contain vinyl groups which are conjugated with the carbonyl group whereas 3-butenoates contain isolated vinyl groups. It is also recognized, however, that it is not essential to have terminal isolated double bonds; accordingly the term "functionally equivalent" is intended to encompass the 2-substituted 5-norbornene compounds. Similarly, it is recognized that the doubly conjugated double bonds also act functionally equivalently to the isolated vinyl groups; a typical structure of this type would consist of a vinylene group enclosed between two carbonyls. The ultimate requirement is that such groups do not interfere with the general characteristics of the quaternary compounds, as related to their ability to form addition copolymers and the ability of such copolymers to crosslink for the purposes described subsequently herein.

Although $Y^{\ominus}$ may be one of the above preferred anions, which do not have surface active properties in water (that is they are non-surfactant anions) it is equally possible for $Y^{\ominus}$ to be an anion which has surfactant properties.

In an embodiment of this invention which is particularly useful for the emulsion polymerization of these quaternary ammonium monomers, the counter-ion Y is an anion which is surface active in water.

In further aspects of this invention the invention provides:

(i) polymer containing units of one or more compounds according to the invention;

(ii) polymer containing at most 50% by weight of units of one or more compounds according to the invention and at least 50% by weight of units of at least one other monoethylenically unsaturated monomer having a group of the formula:

$$H_2C = C<;$$

(iii) a polymerisation process for making a polymer which comprises polymerising one or more compounds according to the invention optionally together with at least one other monoethylenically unsaturated monomer having a group of the formula:

$$H_2C = C<;$$

and

(iv) a polymerisable composition suitable for use in process (iii) comprising one or more compounds according to the invention in a suitable medium optionally together with at least one other monoethylenically unsaturated monomer having a group of the formula:

$$H_2C = C<.$$

To produce the quaternary ammonium monomers of the present invention, a hydrogen acid salt of an appropriate dialkyl amine having the formula:

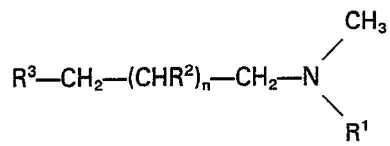

may be reacted under suitable conditions with an epihalohydrin of the formula:

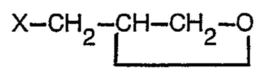

in which X is as defined above, to form halohydroxypropyl dialkyl-quaternary ammonium compounds of the formula:

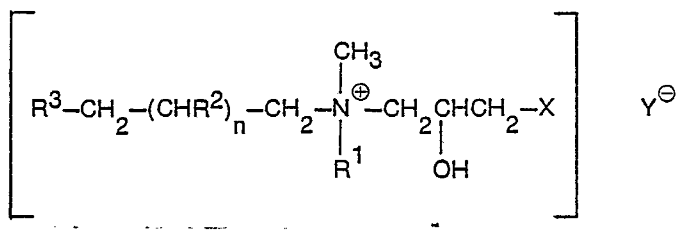

in which X, $Y^{\ominus}$, n, $R^1$, $R^2$, and $R^3$ are as defined above.

Hereinafter in this description any reference to the monomer of the invention in which n in the above formula is 1, $R^1$ is methyl, $R^2$ is —OH, $R^3$ is allyloxy, X is chloro and Y is nitrate or any polymer thereof is for illustrative purposes only and should be taken as a reference to the monomers and polymers of the invention in general.

The monomers are conveniently prepared from the corresponding tertiary amine which is converted to a hydrogen acid salt. The acid salt can then be carefully reacted under the controlled conditions similar to those described in US—A—3,678,098 to produce the quaternary ammonium monomer. In brief summary, the monomers according to the invention can be produced by a process which may be seen as the conversion of a tertiary amine to a hydrogen acid salt followed by reaction of the hydrogen acid salt under essentially neutral conditions (e.g. pH of 6 to 8) with an epihalohydrin, followed by further acidification and dilution to the level of concentration desired for ultimate use of the monomer solution. It should be noted that once the hydrogen acid salt of the tertiary amine is formed, the reaction with the epihalohydrin can be conducted in any of the methods described in the aforementioned U.S. Patent 3,678,098, particularly the examples and the section beginning at line 68 of column 1 and concluding at line 17 of column 2.

The epihalohydrin used for the purposes of this invention may be the epiiodohydrin or the epibromohydrin. It is preferable, however, to use the epichlorohydrin. It has been found that there is a relationship between the rate of reaction (of the epihalohydrin with the amine hydrogen acid salt) and the nature of the $R^1$ substituent on the amino nitrogen. For that reason, it will generally be preferred that $R^1$ be methyl. Nevertheless, strict adherence to the selection of $R^1$ as described above will provide acceptable reaction rates of the amino salts with any of the epihalohydrins.

The selection of the particular hydrogen acid salt is not critical; while either the hydroiodide or hydrobromide is useful, it will generally be preferable to use the acid salt of hydrochloric acid, or nitric acid. The hydrogen acid salts formed with sulfuric acid or acetic acid are useable but these acids are not preferred.

As will be seen from the Examples, the monomers of the present invention are suitably prepared and

stored as aqueous solutions. This is not a critical limitation, however, and if desired, they may be concentrated and/or isolated from the reaction medium in which they are dissolved by removal of the water, typically by vaporization under vacuum.

In the Examples which follow, the equipment consists of a flask equipped with a stirrer, a thermometer, a pH electrode, a reflux condenser, and an addition funnel. Deionized water is used through the examples.

Example 1

A two litre flask cooled on an ice bath is charged with 675 g (6 mols) of 40% aqueous dimethyl amine. There are then added 496 g (4.35 mols) of allyl glycidyl ether over a two hour period with the temperature maintained below about 35°C. At the end of the two hours an additional 226 g of 40% aqueous dimethyl amine are added and the contents of the flask are warmed 40—50°C for three hours. The reaction mixture is then concentrated at 73°C and 25 millimeters of mercury to 640 g of a yellow liquid. The product, the tertiary amine 1-allyloxy-3-dimethylamino-2-hydroxypropane, was titrated and found to contain 5.67 milliequivalents of amine per gram; the calculated value for $C_8H_{17}NO_2$ is 6.29 milliequivalents per gram and the purity of the product is determined to be 90.1%.

The second two litre flask is charged with 456 g of ice water, 315 g (3.4 mols) of 68% nitric acid and 627 g (3.56 mols) of the tertiary amine just described. The amine is added over a period of approximately one-half hour while keeping the temperature under 25°. The pH is about 7.0. The mixture is then heated to 39°C and 3.63 g (3.92 mols) of epichlorohydrin are added over 50 minutes. During this addition, the exothermic reaction is moderated with an ice bath to keep the reaction temperature in the range of 37—44°C. The reaction mixture is allowed to remain overnight after which the pH will be about 7.2 and the concentration of the epichlorohydrin is 7.2%. The contents of the flask are then heated to 40—45°C over a period of five hours while a pH is maintained in the range of 6.5 to 7.3 by periodic additions of the tertiary amine. A total of 10 grams is normally required. After 6 hours, the epichlorohydrin concentration is 3.6% and titration shows about 0.07 milliequivalents per gram of unquaternized amine. A portion, 711 g, is concentrated at reduced pressure to 561 g. The concentrate analyzes as 0.22% for epichlorohydrin, 0.149 milliequivalents per gram of chloride ion, 2.37 milliequivalents per gram of total chloride (by hydrolysis with hot 10% sodium hydroxide) and 80.9% solids; the product concentration, based upon combined chlorine content, is 69.7%.

Examples 2 to 4

A tertiary amine is prepared from the methyl esters of the acid radicals shown in Table I, below, by transesterification with an amino alcohol such as dimethylamino ethanol. This tertiary amine is then treated with nitric acid and epichlorohydrin as in the second part of Example 1 to prepare the corresponding chlorohydroxypropyl quaternary ammonium monomer of the general formula shown previously. In these examples, with reference to the formula provided earlier herein, $R^1$ is $CH_3$, n is 0, X is chloride, and Y is nitrate. With n as 0, there is no $R^2$. The $R^3$ for each of the three examples is shown in Table I.

TABLE I

| Example | $R^3$ | Name |
|---|---|---|
| 2 | $HC—COOCH_3$<br>$\Vert$<br>HC—COO— | Ester of Monomethyl ester of maleic acid |
| 3 | $H_2C{=}CHCH_2COO—$ | Ester of vinyl acetic acid |
| 4 | 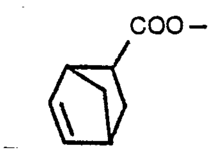 | Ester of 5-Norbornene-2-carboxylic acid |

Example 5

A monomer mixture is prepared consisting of 224 g of butyl acrylate, 871.4 g of vinyl acetate, 2.24 g of itaconic acid and 41.5 g of the concentrated quaternary ammonium compound of Example 1. The monomer mixture was emulsion polymerized by a gradual addition redox process using tertiary butyl hydroperoxide and sodium sulfoxylate formaldehyde as initiators. The aqueous polymer emulsion system is stabilized with 5% of *t*-octyl-phenoxypolyethoxyethanol (40 oxyethylene groups); the resulting emulsion polymer contains 48% solids.

A portion of this emulsion polymer is diluted to 40% solids and 25 g samples are then activated with 1 g of 15% aqueous sodium sesquicarbonate. Air-dried pellets of the polymer are prepared and allowed to swell in dimethylformamide and chlorobenzene. The volume swelling ratios are calculated from the swollen weight of the polymer pellets: the found value is 26 (DMF) and 25 ($C_6H_5Cl$). If the emulsion

polymers are not activated with the sodium sesquicarbonate, the air-dried pellets dissolved in dimethylformamide and chlorobenzene.

Example 6 (Comparative)

The procedures of Example 5 are repeated except that 2.24 g of acrylic acid are used in place of the itaconic acid. The swelling ratio of the activated emulsion polymer are found to be 22 in either the dimethylformamide or the chlorobenzene. The pellets from unactivated emulsion polymer dissolve in the swelling solvents.

Examples 7 to 12 (10, 11 and 12 being Comparative)

Examples 5 and 6 are repeated except that the quaternary ammonium compound employed in each instance corresponds to the quaternary ammonium compounds of Examples 2, 3, and 4 respectively. The results are essentially the same except for the differences predictable on the basis of the $R^3$ moieties as those moieties are defined in Table I.

The constituents on the amino nitrogen bear markedly on the reaction rate and the production of these novel quaternary ammonium monomers. Thus, for example, where the dimethyl compound of Example 1 is useful, and proceeds spontaneously, the diethyl, diisopropyl, and dihydroxyethyl amines are not suitable for producing amines of the type desired. As long as one of the substituents on the tertiary amine nitrogen is methyl, and a second is not excessively long, i.e., not beyond about four carbon atoms, effective reaction rates are possible with added heat.

Examples 13 to 17

Example 1 is repeated with the secondary amines listed in Table II to produce the corresponding quaternary monomers. Some additional heat has to be added in order to initiate and maintain the quaternization reaction and this need for heat increases with the length of the $R^1$ carbon chain.

TABLE II

| Examples | Secondary Amine |
|---|---|
| 13 | hydroxyethyl methyl amine |
| 14 | ethyl methyl amine |
| 15 | i-propyl methyl amine |
| 16 | butyl methyl amine |
| 17 | hydroxypropyl methyl amine |

In each case, it is generally found to be advantageous to utilize an excess of the epichlorohydrin in the quaternization.

Increasing the number of alkene groups in the chain between the ethylenically unsaturated group and the amino nitrogen in the tertiary amine produces an effect somewhat similar to that observed when using longer chain alkyl groups on the amine compound, i.e., it is somewhat more difficult to initiate the reaction and the reaction takes somewhat longer. This effect is not as pronounced as is the case where both of the remaining groups on the amino nitrogen are other than methyl.

Examples 18 to 21

Repetition of Examples 1—4 with the substitution of the epibromohydrin for epichlorohydrin provides quaternization essentially as in Examples 1—4. Changes in the reactivity or the reaction rate are not of sufficient consequence to justify use of one halohydrin over the other and the choice is determined primarily by properties desired in the product and by cost of reactants.

When nitric acid in the foregoing examples is replaced by hydrochloric acid, there is little change in the rate of reaction or in the extent of the reaction, any differences being those normally encountered in reacting tertiary amines with acids to form amine salts. The particular choice of acid amine is dictated primarily by the system in which the resulting monomer will be used, and the effect the anions will have on the system.

The quaternary ammonium monomers of the present invention are polymerizable, and for this purpose, their aqueous solutions may be used directly. Any known polymerization initiator of the free radical type which is effective in aqueous systems can be used. Examples are t-butyl hydroperoxide, ammonium persulfate, and alkali metal persulfates, such as those of sodium or potassium. They are used at the customary dosage of 0.1 to 2% by weight based on monomer weight. They may be used with sodium

hydrosulfite or other reducing agents in redox systems. Alternatively, the polymerization may be effected by actinic radiation.

Emulsion polymerization procedures are particularly effective for polymerization of the quaternary ammonium monomers. As emulsifiers there may be used t-octyl or t-nonyl phenoxypolyethoxyethanols having from about 10 to 50 or more oxyethylene groups, octadecylamine sulfate, cyclohexyldiethyl-(dodecyl)amine sulfate, octadecyltrimethylammonium bromide, polyethoxyamines or mixtures of two or more such emulsifiers.

Any ethylenically unsaturated monomer having a group

$$H_2C{=}C<$$

may be polymerized with the quaternary monomers of the present invention, under conditions such that the polymerization medium is maintained at an acid condition, preferably at a pH of not over 6. Thus by this method, it is possible to produce homopolymers and/or copolymers of the present quaternary monomers with the quaternary monomers of the aforementioned US—A—3,678,098. In addition, it is possible to copolymerize the present novel monomers with any of the monoethylenically unsaturated monomers described in US—A—3,702,799 beginning in Column 4 at line 51 and continuing through line 22 of Column 5.

As was noted previously, experience has shown the difficulty of incorporating methacrylate monomers or the like even at low levels into vinyl acetate copolymers. In addition, the difficulty is complicated by the inhibitory and/or retarding effect on the entire system. The monomers of the present invention may have considerably more suitable reactivity characteristics and can be readily copolymerized with vinyl acetate and may be easily converted to reactive quaternary salts of glycidyl amines by treatment with base. Thus, the quaternary monomers of the present invention could provide superior activity with vinyl acetate systems as compared to the quaternary monomers of US—A—3,678,098 or 3,702,799. In identifying suitable vinyl systems for reaction with the quaternary ammonium monomers in the present invention, care should be paid to the reactivity ratios of the monomers and/or to the Q and e values as determined in accordance with the Alfrey-Price Q—e scheme. These terms are generally known in the art. Substantially greater detail in explaining them can be found in *Free Radicals In Solution*, Cheres Walling, 1957, John Wiley & Sons, Inc., New York, NY, Chapter 4, particularly pages 100—106, 116—120, and 140—144. Similar information can be found in the *Polymer Handbook*, J. Brandrup and E. H. Immergut, 1967, Interscience Publishers, New York, NY, under the heading "Copolymerization Reactivity Ratios" with particular reference to pages II—249 — II—257. Utilizing this type of information it can be noted that the reactivity ratios, $r^1$ and $r^2$, of the vinyl monomer (preferably vinyl acetate) and the quaternary ammonium monomer should differ by no more than a power of 10 and neither should be zero. The Q—e values of the quaternary ammonium monomer should be similar to the Q—e values of the vinyl monomer.

Table III presents a list of preferred comonomers for copolymerization, in minor amounts, in a mixture with vinyl acetate and the novel quaternary monomers of the present invention. The reaction proceeds essentially as described in the aforementioned Examples but with production of the corresponding copolymer.

TABLE III

Methyl Acrylate
Ethyl Acrylate
Butyl Acrylate
Methyl Methacrylate/Styrene; 1:1 (wt. basis)
Methacrylic Acid
Acrylic Acid
Butyl Acrylate/Styrene, 1:1 (wt. basis)
Acrylonitrile

It should be recognized that the quaternary monomers of the present invention can also be homopolymerized under essentially the same conditions used for copolymerization. The use of such homopolymers are, however, considerably more limited since homopolymerization does not allow for the great variation in polymer characteristics obtained with copolymerization. The uses described in the aforementioned US—A—3,702,799 at Column 7, lines 10—37 illustrate the uses of such homopolymers to improve wet strength of paper and as flocculants. Information contained therein is equally applicable to the present homopolymers. US—A—3,702,799 also describes the use of various polymers in fibers particularly use in antistatic dying and moisture regain properties of fibers and the present copolymers can be used in the same manner with modification of properties offered by the presence of the specified allylic unsaturation in the polymer structure.

Major uses of the copolymers of the present invention are found in (i) the production of paper in which these copolymers can be used as wet strength agents and (ii) as electroconductive aids in making various electroconductive papers for electrostatic image reproduction systems.

**Claims for the Contracting States: BE CH DE FR GB IT LI NL SE**

1. The compounds of the formula:

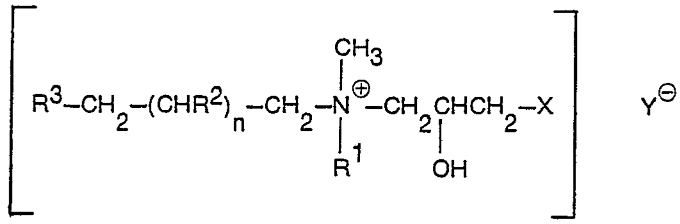

wherein

$R^1$ is a ($C_1$—$C_4$) straight chain alkyl group optionally hydroxy-substituted,

n is 0 or 1,

$R^2$ is H or OH,

$R^3$ is an alkenoxy group containing an allyl group or a carbalkenoxy group containing a double bond functionally equivalent to an isolated terminal double bond,

X is halo, and

$Y^\ominus$ is an anion.

2. The compounds as claimed in Claim 1 wherein $Y^\ominus$ is one of the following: bromide, chloride, nitrate, sulphate and acetate.

3. The compounds as claimed in either preceding claim wherein X is Cl.

4. The compounds as claimed in any preceding claim wherein $R^3$ is such that any compound is an ether of allyl alcohol or (i) an ester of the monomethyl ester of maleic acid, (ii) an ester of vinyl acetic acid, or (iii) an ester of 5-norbornene-2-carboxylic acid.

5. Polymer containing units of one or more compounds as claimed in any preceding claim.

6. Polymer containing at most 50% by weight of units of one or more compounds as claimed in any of claims 1 to 5 and at least 50% by weight of units of at least one other monoethylenically unsaturated monomer having a group of the formula:

$$H_2C{=}C<.$$

7. Polymer as claimed in Claim 5 containing units of one or more compounds according to Claim 4.

8. Polymer as claimed in Claim 5 or 6 containing units of vinyl acetate.

9. A polymerisation process for making a polymer which comprises polymerising one or more compounds as claimed in any of claims 1 to 4 optionally together with at least one other monoethylenically unsaturated monomer having a group of the formula:

$$H_2C{=}C<.$$

10. A polymerisable composition suitable for use in a process as claimed in claim 9 which comprises one or more compounds as claimed in any of claims 1 to 4 in a suitable medium optionally together with at least one other monoethylenically unsaturated monomer having a group of the formula:

$$H_2C{=}C<.$$

**Claims for the Contracting State: AT**

1. A polymerisation process for making a polymer which comprises polymerising one or more compounds of the formula:

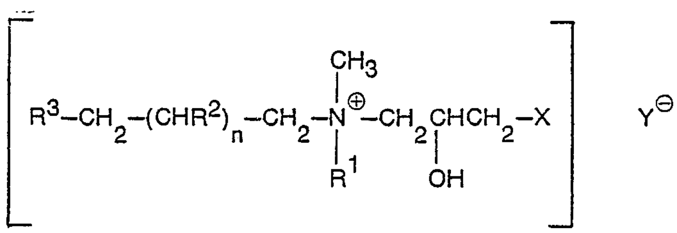

wherein

$R^1$ is a ($C_1$—$C_4$) straight chain alkyl group optionally hydroxylsubstituted,

n is 0 or 1,

$R^2$ is H or OH,

$R^3$ is an alkenoxy group containing an allyl group or a carbalkenoxy group containing a double bond functionally equivalent to an isolated terminal double bond,

X is halo, and

$Y^\ominus$ is an anion,

optionally together with at least one other monoethylenically unsaturated monomer having a group of the formula:

$$H_2C=C<.$$

2. A process as claimed in Claim 1 wherein $Y^\ominus$ is one of the following: bromide, chloride, nitrate, sulphate and acetate.

3. A process as claimed in either preceding claim wherein X is Cl.

4. A process as claimed in any preceding claim wherein $R^3$ is such that any compound is an ether of allyl alcohol or (i) an ester of the monomethyl ester of maleic acid, (ii) an ester of vinyl acetic acid, or (iii) an ester of 5-norbornene-2-carboxylic acid.

5. A polymerisable composition suitable for use in a process as claimed in any preceding claim which comprises one or more compounds as defined in any of claims 1 to 4 in a suitable medium optionally together with at least one other monoethylenically unsaturated monomer having a group of the formula

$$H_2C=C<.$$

**Patentansprüche für die Vertragsstaaten: BE CH DE FR GB IT LI NL SE**

1. Verbindungen der Formel

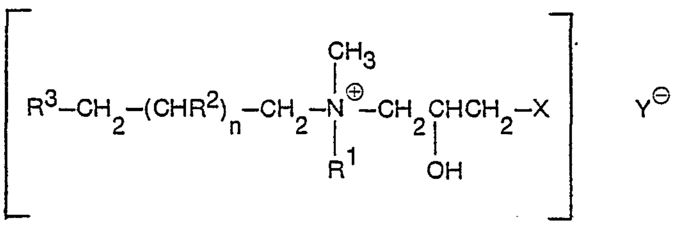

worin $R^1$ eine geradkettige ($C_1$—$C_4$)Alkylgruppe, die gegebenenfalls hydroxysubstituiert ist, n 0 oder 1 ist, $R^2$ H oder OH ist, $R^3$ eine Alkenoxygruppe ist, die eine Allylgruppe enthält, oder eine Carbalkenoxygruppe, die eine Doppelbindungsfunktionalität enthält, welche einer isolierten endständigen Doppelbindung äquivalent ist, enthält, X Halogen ist, und $Y^\ominus$ ein Anion ist.

2. Verbindungen nach Anspruch 1, dadurch gekennzeichnet, das $Y^\ominus$ eines der folgenden ist: Bromid, Chlorid, Nitrat, Sulfat und Azetat.

3. Verbindungen nach einem der vorhergehenden Ansprüche, dadurch gekennzeichnet, daß X für Cl steht.

4. Verbindungen nach einem der vorhergehenden Ansprüche, dadurch gekennzeichnet, daß $R^3$ derartig ist, daß jede Verbindung ein Ether von Allylalkohol oder (i) ein Ester des Monomethylesters von Maleinsäure, (ii) ein Ester von Vinylessigsäure oder (iii) ein Ester von 5-Norbornen-2-carbonsäure ist.

5. Polymeres, das Einheiten einer oder mehrerer Verbindungen gemäß einem der vorhergehenden Ansprüche enthält.

6. Polymeres, das höchstens 50 Gew.-% einer oder mehrerer Verbindungen gemäß einem der Ansprüche 1 bis 5 und wenigstens 50 Gew.-% Einheiten wenigstens eines anderen monoethylenisch ungesättigten Monomeren einer Gruppe der Formel:

$$H_2C=C<$$

enthält.

7. Polymeres nach Anspruch 5, das Einheiten eines oder mehrerer Verbindungen gemäß Anspruch 4 enthält.

8. Polymeres nach Anspruch 5 oder 6, das Einheiten von Vinylacetat enthält.

9. Polymerisationsverfahren zur Herstellung eines Polymeren, dadurch gekennzeichnet, daß eine oder mehrere Verbindungen gemäß einem der Ansprüche 1 bis 4, gegebenenfalls zusammen mit wenigstens einem anderen monoethylenisch ungesättigten Monomeren mit einer Gruppe der Formel

$$H_2C=C<$$

polymerisiert wird.

10. Polymerisierbare Masse, die für eine Verwendung in einem Verfahren gemäß Anspruch 9 geeignet ist, gekennzeichnet durch eine oder mehrere Verbindungen gemäß einem der Ansprüche 1 bis 4 in einem geeigneten Medium, gegebenenfalls zusammen mit wenigstens einem anderen monoethylenisch ungesättigten Monomeren mit einer Gruppe der Formel

$$H_2C=C<.$$

**Patentansprüche für den Vertragsstaat: AT**

1. Polymerisationsverfahren zur Herstellung eines Polymeren, dadurch gekennzeichnet, daß ein oder mehrere Verbindungen der Formel

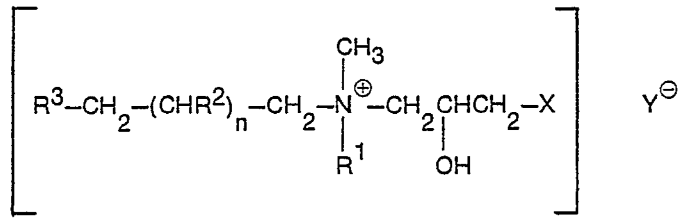

worin $R^1$ eine geradkettige ($C_1$—$C_4$)Alkylgruppe ist, die gegebenenfalls hydroxysubstituiert ist, n 0 oder 1 ist, $R^2$ H oder OH ist, $R^3$ eine Alkenoxygruppe ist, die eine Allylgruppe oder eine Carbalkenoxygruppe enthält, die eine Doppelbindungsfunktionalität enthält, die einer isolierten endständigen Doppelbindung äquivalent ist, X Halogen ist, und $Y^\ominus$ ein Anion bedeutet, gegebenenfalls zusammen mit wenigstens einem anderen monoethylenisch ungesättigten Monomeren mit einer Gruppe der Formel

$$H_2C=C<$$

polymerisiert wird.

2. Verfahren nach Anspruch 1, dadurch gekennzeichnet, daß $Y^\ominus$ eines der folgenden ist: Bromid, Chlorid, Nitrat, Sulfat und Azetat.

3. Verfahren nach einem der vorhergehenden Ansprüche, dadurch gekennzeichnet, daß X für Cl steht.

4. Verfahren nach einem der vorhergehenden Ansprüche, dadurch gekennzeichnet, daß $R^3$ derartig ist, daß jede Verbindung ein Ether von Allylalkohol ist oder (i) ein Ester des Monoethylesters von Maleinsäure, (ii) ein Ester von Vinylessigsäure oder (iii) ein Ester von 5-Norbonen-2-carbonsäure.

5. Polymerisierbare Masse, die für eine Verwendung in einem Verfahren gemäß einem der vorhergehenden Ansprüche geeignet ist, gekennzeichnet durch eine oder mehrere Verbindungen, wie in einem der Ansprüche 1 bis 4 definiert, in einem geeigneten Medium, gegebenenfalls zusammen mit wenigstens einem anderem monoethylenisch ungesättigten Monomeren mit einer Gruppe der Formel

$$H_2C=C<.$$

**Revendications pour les Etats contractants: BE CH DE FR GB IT LI NL SE**

1. Les composés de formule:

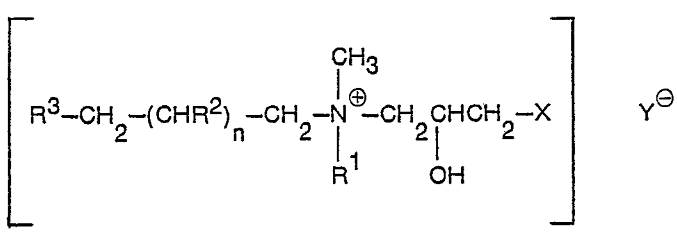

dans laquelle $R^1$ est un groupe alcoyle à chaîne droite ($C_1$—$C_4$) éventuellement hydroxy-substitué, n est 0 ou 1, $R^2$ est H ou OH, $R^3$ est un groupe alcénoxy contenant un groupe allyle ou un groupe carbalcénoxy contenant une double liaison fonctionnellement équivalente à une double liaison terminale isolée, X est un halogéno et $Y^\ominus$ est un anion

2. Les composés comme revendiqué dans la revendication 1, dans lesquels $Y^\ominus$ est un des suivants: bromure, chlorure, nitrate, sulfate et acétate.

3. Les composés comme revendiqué dans l'une quelconque des revendications précédentes où X est Cl.

4. Les composés comme revendiqué dans l'une quelconque des revendications précédentes, où $R^3$ est tel que tout composé est un éther d'alcool allylique ou (i) un ester de l'ester monométhylique de l'acide maléique, (ii) un ester d'acide vinylacétique ou (iii) un ester d'acide 5-norbornène-2-carboxylique.

5. Polymère contenant des motifs d'un ou plusieurs composés comme revendiqué dans l'une quelconque des revendications précédentes.

6. Polymère contenant au plus 50% en poids de motifs d'un ou plusieurs composés comme revendiqué dans l'une quelconque des revendications 1 à 5 et au moins 50% en poids de motifs d'au moins un autre monomère à insaturation monoéthylénique ayant un groupe de formule:

$$H_2C{=}C{<}.$$

7. Polymère comme revendiqué dans la revendication 5 contenant des motifs d'un ou plusieurs composés selon la revendication 4.

8. Polymère comme revendiqué dans la revendication 5 ou 6 contenant des motifs d'acétate de vinyle.

9. Un procédé de polymérisation pour préparer un polymère qui comprend la polymérisation d'un ou plusieurs composés comme revendiqué dans l'une quelconque des revendications 1 à 4 éventuellement avec au moins un autre monomère à insaturation monoéthylénique ayant un groupe de formule

$$H_2C{=}C{<}.$$

10. Une composition polymérisable appropriée à l'emploi dans un procédé comme revendiqué dans la revendication 9 qui comprend un ou plusieurs composés comme revendiqué dans l'une quelconque des revendications 1 à 4 dans un milieu approprié éventuellement avec au moins un autre monomère à insaturation monoéthylénique ayant un groupe de formule:

$$H_2C{=}C{<}.$$

**Revendications pour l'Etat contractant: AT**

1. Un procédé de polymérisation pour préparer un polymère qui comprend la polymérisation d'un ou plusieurs composés de formule:

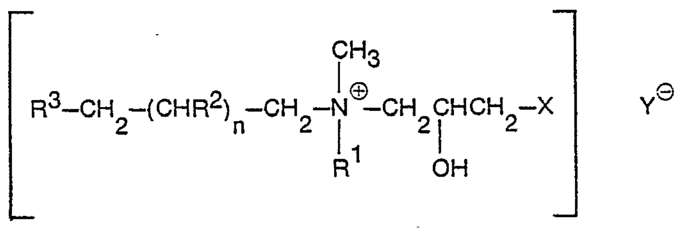
.

dans laquelle $R^1$ est un groupe alcoyle à chaîne droite ($C_1$—$C_4$) éventuellement hydroxy-substitué, n est 0 ou 1, $R^2$ est H ou OH, $R^3$ est un groupe alcénoxy contenant un groupe allyle ou un groupe carbalcénoxy contenant une double liaison fonctionnellement équivalente à une double liaison terminale isolée, X est un halogéno et $Y^{\ominus}$ est un anion, éventuellement avec au moins un autre monomère à insaturation monoéthylénique ayant un groupe de formule:

$$H_2C{=}C{<}.$$

2. Un procédé comme revendiqué dans la revendication 1 dans lequel $Y^{\ominus}$ est un des suivants: bromure, chlorure, nitrate, sulfate et acétate.

3. Un procédé comme revendiqué dans l'une quelconque des revendications précédentes dans lequel X est Cl.

4. Un procédé comme revendiqué dans l'une quelconque des revendications précédentes dans lequel $R^3$ est tel que tout composé est un éther d'alcool allylique ou (i) un ester de l'ester monométhylique de l'acide maléique, (ii) un ester de l'acide vinylacétique ou (iii) un ester de l'acide 5-norbornène-2-carboxylique.

5. Une composition polymérisable appropriée à l'emploi dans un procédé comme revendiqué dans l'une quelconque des revendications précédentes qui comprend un ou plusieurs composés comme défini dans l'une quelconque des revendications 1 à 4 dans un milieu approprié éventuellement avec au moins un autre monomère à insaturation monoéthylénique ayant un groupe de formule

$$H_2C{=}C{<}.$$